# EUROPÄISCHE PATENTANMELDUNG

(11) **EP 2 416 482 A1**
(43) Veröffentlichungstag der Anmeldung: **08.02.2012**
(21) Anmeldenummer: 10171890.6
(22) Anmeldetag: 04.08.2010
(51) Int. Cl.: H02M 5/32, H02K 21/24

(54) **Verfahren zum Umwandeln von elektrischer Energie sowie Energiewandler**

(71) Anmelder: Glaner, Wieslaw, 89-650 Czersk (PL)
(72) Erfinder: Glaner, Wieslaw, 89-650 Czersk (PL)

(57) **Zusammenfassung**

Bei der vorliegenden Erfindung handelt es sich um ein Verfahren zum Umwandeln von elektrischer Energie mit folgenden Schritten:
a) Umwandeln einer ersten elektrischen Energie in eine Rotationsenergie, wobei die Rotationsenergie als eine erste Drehbewegung mit einer ersten Drehzahl vorliegt.
b) Umwandeln der ersten Drehbewegung in eine zweite Drehbewegung mit einer zweiten Drehzahl, wobei die zweite Drehzahl geringer ist als die erste Drehzahl.
c) Umwandeln der Rotationsenergie der zweiten Drehbewegung in eine zweite elektrische Energie, wobei die Umwandlung in die elektrische Energie über einen Alternator (11) erfolgt, wobei der Alternator (11) aus mindestens zwei Magnetscheiben (15a, 15b) mit jeweils mehreren Dauermagneten (19) und mindesten einem Stator (17) mit mehreren Spulen besteht und wobei jeder Stator (17) zwischen jeweils zwei Magnetscheiben (15a, 15b) angeordnet ist und die zweite Drehbewegung die mindestens zwei Magnetscheiben (15a, 15b) relativ zu dem Stator (17) antreibt.

## Beschreibung

Die vorliegende Erfindung betrifft ein Verfahren zum Umwandeln von Energie sowie einen Energiewandler.

Energiewandler zum Wandeln von elektrischer Energie in elektrische Energie anderer Form, beispielsweise die Wandlung von zweiphasigem Wechselstrom in dreiphasigen Wechselstrom sind aus dem Stand der Technik bekannt. Dabei kommen häufig entsprechende Transformatoren zum Einsatz. Die Erzeugung von Drehstrom erfolgt über entsprechende Generatoren.

Grundsätzlich sind die Energiewandlung und die Erzeugung von Strom verlustbehaftet, sodass die eingebrachte Energie stets größer ist als die aus dem System entnehmbare Energie.

Es ist daher die Aufgabe der vorliegenden Erfindung, ein Verfahren zum Umwandeln von elektrischer Energie sowie einen Energiewandler bereitzustellen, bei dem die Verluste reduziert sind.

Die Aufgabe wird durch die Merkmale des Anspruchs 1 und der Anspruchs 9 gelöst.

Das erfindungsgemäße Verfahren zum Umwandeln von elektrischer Energie sieht folgende Schritte vor:
a) Umwandeln einer ersten elektrischen Energie in eine Rotationsenergie, wobei die Rotationsenergie als eine erste Drehbewegung mit einer ersten Drehzahl vorliegt.
b) Umwandeln der ersten Drehbewegung in eine zweite Drehbewegung mit einer zweiten Drehzahl, wobei die zweite Drehzahl geringer ist als die erste Drehzahl.
c) Umwandeln der Rotationsenergie der zweiten Drehbewegung in eine zweite elektrische Energie, wobei die Umwandlung in die zweite elektrische Energie über einen Alternator erfolgt, wobei der Alternator aus mindestens zwei Magnetscheiben mit jeweils mehreren Dauermagneten und mindesten einem Stator mit mehreren Spulen besteht und wobei jeder Stator zwischen jeweils zwei Magnetscheiben angeordnet ist und die zweite Drehbewegung die mindestens zwei Magnetscheiben relativ zu dem Stator antreibt.

Es hat sich überaschender Weise herausgestellt, dass ein Alternator aus mindestens zwei Magnetscheiben mit jeweils mehreren Dauermagneten und mit mindestens einem Stator mit mehreren Spulen bei einer relativ geringen Drehzahl zu der Erzeugung einer elektrischen Energie angetrieben werden kann. Dabei hat sich herausgestellt, dass die benötigte Drehbewegung in vorteilhafter Weise durch die Umwandlung einer ersten elektrischen Energie in eine Rotationsenergie, wobei die Rotationsenergie als eine erste Drehbewegung mit einer ersten Drehzahl vorliegt und die Umwandlung der ersten Drehbewegung in eine zweite Drehbewegung mit einer zweiten Drehzahl, wobei die zweite Drehzahl geringer ist als die erste Drehzahl, bereitgestellt werden kann.

Die heutzutage verfügbaren Dauermagneten sind dabei von einer derart guten Qualität, dass ein Alternator, der aus mindestens zwei Magnetscheiben mit jeweils mehreren Dauermagneten und mit mindestens einem Stator mit mehreren Spulen besteht, elektrische Energie aus einer Drehbewegung erzeugen kann, ohne dass hohe Verluste entstehen.

Nach einem Ausführungsbeispiel der Erfindung ist vorgesehen, dass der Schritt a) über einen Elektromotor erfolgt. Über einen Elektromotor ist das Umwandeln der ersten elektrischen Energie in eine Rotationsenergie, wobei die Rotationsenergie als eine erste Drehbewegung in einer ersten Drehzahl vorliegt, auf besonders einfache Art und Weise möglich.

Im erfindungsgemäßen Verfahren kann vorgesehen sein, dass Schritt b) über ein drehzahlreduzierendes Getriebe erfolgt. Die Umwandlung der ersten Drehbewegung in eine zweite Drehbewegung mit einer zweiten Drehzahl, wobei die zweite Drehzahl geringer ist als die erste Drehzahl, ist über ein derartiges Getriebe in besonders vorteilhafter Weise möglich. Dabei können Getriebe unterschiedlicher Art zum Einsatz kommen. Beispielsweise kann das Getriebe ein formschlüssiges Getriebe wie ein beispielsweise Zahnradgetriebe oder ein Zahnriementrieb sein. Auch sind kraftschlüssige Getriebe, wie beispielsweise Riementriebe oder Kegelringgetriebe möglich.

Der Alternator kann aus zwei Statoren und vier Magnetscheiben bestehen. Auf diese Weise ist die Erzeugung einer zweiten elektrischen Energie mit höherer Leistung möglich.

Die erste elektrische Energie kann Wechselstrom sein, der vorzugsweise eine Spannung zwischen 230 V oder 400 V besitzt. Wechselstrom mit einer derartigen Leistung ist über das öffentliche Stromnetz verfügbar. Darüber hinaus existieren auf dem Markt viele Elektromotoren, die mit einer derartigen Spannung betrieben werden.

Die zweite elektrische Energie kann ein Drehstrom, vorzugsweise ein Dreiphasenwechselstrom sein. Durch die entsprechende Schaltung der Spulen des Stators ist die Erzeugung einer derartigen elektrischen Energie möglich.

In einem Ausführungsbeispiel der Erfindung ist vorgesehen, dass ein Alternator verwendet wird, bei dem die Anzahl der Dauermagneten auf jeder Magnetscheibe mindestens 24 ist.
Ein derartiger Aktuator hat sich als besonders vorteilhaft erwiesen.

Bei einem besonders bevorzugten Ausführungsbeispiel der Erfindung ist vorgesehen, dass die erste Drehzahl mindestens 1400 U/min, vorzugsweise 1400 U/min oder 2800 U/min, beträgt und/oder dass die zweite Drehzahl zwischen 100 U/min und 300 U/min, vorzugsweise 250 U/min oder 130 U/min, beträgt.

Es hat sich herausgestellt, dass bei dem erfindungsgemäßen Verfahren der Aktuator bei einer Umdrehung von 250 U/min besonders vorteilhaft die zweite elektrische Energie erzeugt. Beispielsweise erzeugt ein derartiger Alternator bei 250 U/min eine Spannung von 110 V eine Leistung von 3 kW. Bei 130 U/min kann der Aktuator beispielsweise bis zu 1,5 kW Leistung erzeugen.

Dabei hat sich herausgestellt, dass für die Bereitstellung der ersten Drehzahl ein Elektromotor ausreichend ist, der eine Leistung von ca. 1,5 kW bei 1400 U/min und einer Eingangsspannung von 230 V erzeugt. Alternativ kann auch ein Elektromotor eingesetzt werden, der mit 400 V betrieben wird und eine Rotationsenergie mit 2800 U/min erzeugt. Bei dieser Drehzahl beträgt die Leistungsaufnahme ebenfalls ca. 1,5 kW.

Die Erfindung sieht ferner einen Energiewandler zur Durchführung des erfindungsgemäßen Verfahrens vor mit einem Elektromotor, einem drehzahlreduzierenden Getriebe und einem Alternator, wobei der Alternator aus mindestens zwei Magnetscheiben mit jeweils mehreren Dauermagneten und mindesten einem Stator mit mehreren Spulen besteht, wobei jeder Stator zwischen jeweils zwei Magnetscheiben angeordnet ist.

Dabei kann der Energiewandler Getriebe unterschiedlicher Bauart aufweisen. Beispielsweise kann der Energiewandler ein formschlüssiges Getriebe wie beispielsweise ein Zahnradgetriebe oder ein Zahnriementrieb aufweisen.
Auch ist es möglich, dass ein kraftschlüssiges Getriebe vorgesehen ist, wie beispielsweise ein Riemengetriebe oder ein Kegelringgetriebe.

Der Elektromotor kann beispielsweise ein mit 230 V betriebener Elektromotor sein, der 1400 U/min erzeugt und eine maximale Leistungsaufnahme von 1,5 kW besitzt.

In einem Ausführungsbeispiel der Erfindung ist vorgesehen, dass die Magnetscheiben jeweils mindestens 24 Dauermagneten aufweisen und/oder einen Durchmesser von mindestens 520 mm besitzen.

Die Spulen des Stators können beispielsweise Kupferspulen sein.

Die Statoren können beispielsweise mit Kunstharz beschichtet sein.

Im Folgenden wird die Erfindung unter Bezugnahme auf die nachfolgenden Figuren näher erläutert:

Es zeigen:
- Fig. 1: eine Schemazeichnung zur Veranschaulichung des erfindungsgemäßen Verfahrens,
- Fig. 2: eine schematische perspektivische Ansicht eines erfindungsgemäßen Energiewandlers zur Durchführung des erfindungsgemäßen Verfahrens und
- Fig. 3: eine Draufsicht auf eine Magnetscheibe des erfindungsgemäßen Energiewandlers.

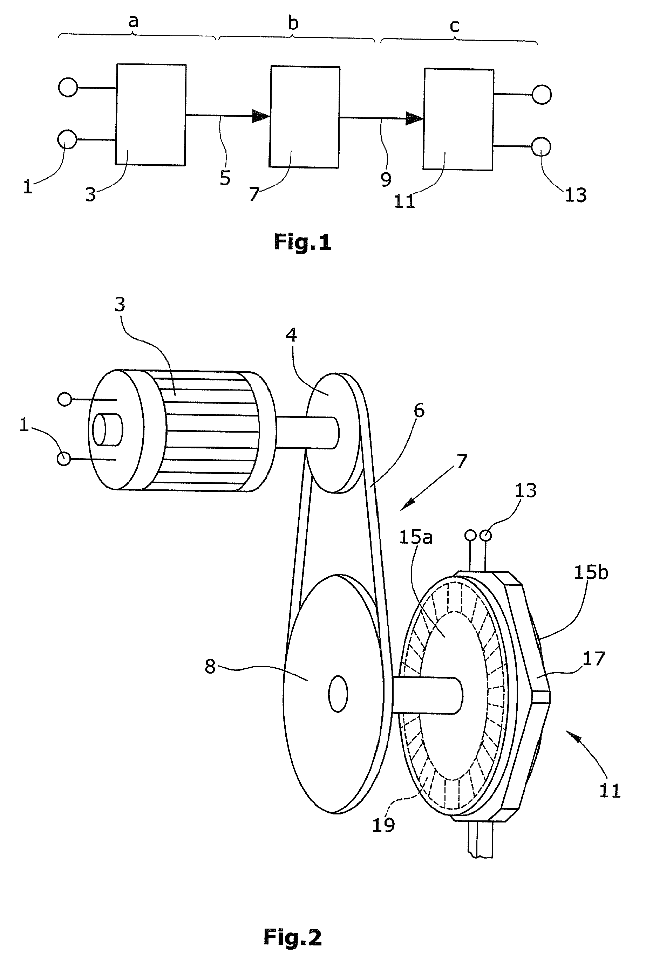

In Fig. 1 ist eine Schemazeichnung zur Verdeutlichung des erfindungsgemäßen Verfahrens als Flussdiagramm dargestellt. In Verfahrensschritt a) wird erfindungsgemäß eine erste elektrische Energie, die von einer ersten Stromquelle 1 erzeugt wird, in eine Rotationsenergie umgewandelt. Dies erfolgt über beispielsweise einen Elektromotor 3, der die Rotationsenergie in Form einer ersten Drehbewegung mit einer ersten Drehzahl bereitstellt. Die erste Drehbewegung mit einer ersten Drehzahl ist in Fig. 1 durch den Pfeil mit dem Bezugszeichen 5 dargestellt.

In Verfahrensschritt b) wird die erste Drehbewegung in eine zweite Drehbewegung mit einer zweiten Drehzahl umgewandelt, wobei die zweite Drehzahl geringer ist als die erste Drehzahl. Dies erfolgt beispielsweise über ein drehzahlreduzierendes Getriebe 7. Die zweite Drehbewegung ist in Fig. 1 durch den Pfeil mit dem Bezugszeichen 9 dargestellt.

In Verfahrensschritt c) erfolgt eine Umwandlung der Rotationsenergie der zweiten Drehbewegung in eine zweite elektrische Energie, wobei die Umwandlung in elektrische Energie über einen Alternator 11 erfolgt. Die zweite elektrische Energie kann dabei beispielsweise als ein Dreiphasenwechselstrom vorliegen, der über einen Anschluss 13 abgegriffen werden kann.

In Fig. 2 ist ein erfindungsgemäßer Energiewandler 100 zur Durchführung des erfindungsgemäßen Verfahrens schematisch in einer perspektivischen Darstellung gezeigt.

Der Energiewandler 100 weist einen Elektromotor 3 auf, der über eine schematisch dargestellte Stromquelle 1 betrieben wird. Der Elektromotor 3 ist über ein drehzahlreduzierendes Getriebe 7 mit dem Alternator 11 verbunden. In dem in Fig. 2 dargestellten Ausführungsbeispiel ist das drehzahlreduzierende Getriebe 7 als Zahnriementrieb ausgeführt, sodass der Elektromotor 3 ein Antriebsritzel 4 antreibt.

Über einen Zahnriemen 6 wird das abtriebsseitige Zahnrad 8 angetrieben, das mit dem Alternator 11 verbunden ist. Der Elektromotor 3 wandelt somit eine erste elektrische Energie in eine Rotationsenergie, die in Form einer ersten Drehbewegung mit einer ersten Drehzahl vorliegt. Die erste Drehzahl ist somit die Drehzahl des Antriebsritzels 4. In dem zweiten Verfahrensschritt wandelt der erfindungsgemäße Energiewandler 100 die erste Drehbewegung in eine zweite Drehbewegung mit einer zweiten Drehzahl um, wobei die zweite Drehzahl geringer ist als die erste Drehzahl. Die zweite Drehzahl ist somit die Drehzahl des Zahnrades 8.

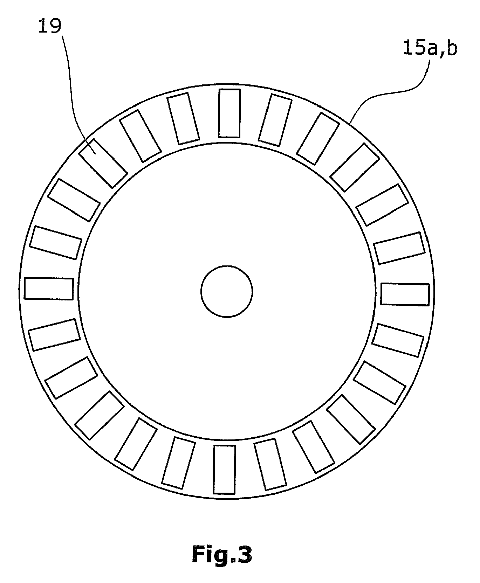

Über das Zahnrad 8 werden zwei Magnetscheiben 15a, 15b des Alternators 11 angetrieben. Zwischen den Magnetscheiben 15, 15b ist ein Stator 17 angeordnet, der mehrere Spulen, die in Fig. 2 nicht dargestellt sind, aufweist. Der Stator 17 ist gegenüber den Magnetscheiben 15a, 15b statisch angeordnet. Aufgrund der Relativbewegung zwischen den Magnetscheiben 15a, 15b wird über Dauermagneten 19, die am besten aus Fig. 3 ersichtlich sind, induktiv eine Spannung in die Spulen des Stators 17 übertragen, sodass eine zweite elektrische Energie an den entsprechenden Anschlüssen 13 erzeugt wird. Bei der zweiten elektrischen Energie kann es sich um einen mehrphasigen Strom handeln.

Es hat sich herausgestellt, dass mit dem Alternator 11 eine zweite elektrische Energie erzeugt werden kann, die eine Leistung von beispielsweise bis zu 3000 W besitzt, wenn die Magnetscheiben 15a, 15b mit 250 U/min betrieben werden. Um eine derartige Drehzahl des Alternators zu erzeugen, hat sich überaschender Weise herausgestellt, dass ein Elektromotor 3 ausreicht, der beispielsweise 1400 U/min leistet und dabei maximal 1,5 kW Leistung aufnimmt.

Auf diese Weise ist eine Energieumwandlung auf sehr effiziente Weise möglich.

In Fig. 3 ist eine Magnetscheibe 15a, 15b des Alternators 11 der Fig. 2 schematisch in der Draufsicht dargestellt. Wie aus Fig. 3 hervorgeht, sind 24 Dauermagneten 19 auf der Oberfläche der Magnetscheibe angeordnet. Die Magnetscheibe kann beispielsweise einen Durchmesser von 520 mm besitzen. Selbstverständlich ist es auch möglich, Magnetscheiben mit anderen Durchmessern und einer anderen Anzahl von Magneten zu verwenden. Ferner ist es auch möglich, einen Alternator mit mehreren Statoren zu verwenden, wobei jeder Stator zwischen zwei Magnetscheiben angeordnet ist.

Durch die Verwendung unterschiedlicher Statoren können mit dem erfindungsgemäßen Energiewandler auch andersartige Ströme erzeugt werden.

Der Elektromotor kann beispielsweise über 230 V Wechselstrom betrieben werden.

Selbstverständlich ist es auch möglich, drehzahlreduzierende Getriebe anderer Art zu verwenden, wie beispielsweise Zahnradgetriebe oder Riementriebe.

## Patentansprüche

1. Verfahren zum Umwandeln von elektrischer Energie mit folgenden Schritten:
a) Umwandeln einer ersten elektrischen Energie in eine Rotationsenergie, wobei die Rotationsenergie als eine erste Drehbewegung mit einer ersten Drehzahl vorliegt.
b) Umwandeln der ersten Drehbewegung in eine zweite Drehbewegung mit einer zweiten Drehzahl, wobei die zweite Drehzahl geringer ist als die erste Drehzahl.
c) Umwandeln der Rotationsenergie der zweiten Drehbewegung in eine zweite elektrische Energie, wobei die Umwandlung in die elektrische Energie über einen Alternator (11) erfolgt, wobei der Alternator (11) aus mindestens zwei Magnetscheiben (15a, 15b) mit jeweils mehreren Dauermagneten (19) und mindesten einem Stator (17) mit mehreren Spulen besteht und wobei jeder Stator (17) zwischen jeweils zwei Magnetscheiben (15a, 15b) angeordnet ist und die zweite Drehbewegung die mindestens zwei Magnetscheiben (15a, 15b) relativ zu dem Stator (17) antreibt.

2. Verfahren nach Anspruch 1, **dadurch gekennzeichnet, dass** Schritt a) über einen Elektromotor (3) erfolgt.

3. Verfahren nach Anspruch 1 oder 2, **dadurch gekennzeichnet, dass** Schritt b) über ein drehzahlreduzierendes Getriebe (7) erfolgt.

4. Verfahren nach einem der Ansprüche 1 bis 3, **dadurch gekennzeichnet, dass** der Alternator (11) aus 2 Statoren (17) und 4 Magnetscheiben (15a, 15b) besteht.

5. Verfahren nach einem der Ansprüche 1 bis 4, **dadurch gekennzeichnet, dass** die erste elektrische Energie Wechselstrom ist, der vorzugsweise eine Spannung 230 V oder 400 V besitzt.

6. Verfahren nach einem der Ansprüche 1 bis 5, **dadurch gekennzeichnet, dass** die zweite elektrisch Energie Drehstrom, vorzugsweise Dreiphasenwechselstrom ist.

7. Verfahren nach einem der Ansprüche 1 bis 6, **dadurch gekennzeichnet, dass** die Anzahl der Dauermagneten (19) auf jeder Magnetscheibe (15a, 15b) mindestens 24 ist.

8. Verfahren nach einem der Ansprüche 1 bis 7, **dadurch gekennzeichnet, dass** die erste Drehzahl mindestens 1400 U/min, vorzugsweise 1400 U/min oder 2800 U/min, beträgt und/oder dass die zweite Drehzahl zwischen 100 U/min und 300 U/min, vorzugsweise 250 U/min oder 130 min, beträgt.

9. Energiewandler (100) zur Durchführung eines Verfahrens nach einem der Ansprüche 1 bis 8 mit einem Elektromotor (3), einem drehzahlreduzierenden Getriebe (7) und einem Alternator (11), wobei der Alternator (11) aus mindestens zwei Magnetscheiben (15a, 15b) mit jeweils mehreren Dauermagneten (19) und mindesten einem Stator (17) mit mehreren Spulen besteht, wobei jeder Stator (17) zwischen jeweils zwei Magnetscheiben (15a, 15b) angeordnet ist.

10. Energiewandler nach Anspruch 9, **dadurch gekennzeichnet, dass** die Magnetscheiben (15a, 15b) jeweils mindestens 48 Dauermagneten (19) und/oder einen Durchmesser von mindestens 520mm aufweisen.

11. Energiewandler nach Anspruch 9 oder 10, **dadurch gekennzeichnet, dass** die Spulen Kupferspulen sind.

12. Energiewandler nach einem der Anspruch 9 bis 11, **dadurch gekennzeichnet, dass** jeder Stator (17) mit Kunstharz beschichtet sind.
